Europäisches Patentamt

European Patent Office

Office européen des brevets

(19)

(11) Veröffentlichungsnummer: **0 219 744**
**B1**

(12) EUROPÄISCHE PATENTSCHRIFT

(45) Veröffentlichungstag der Patentschrift:
04.01.89

(21) Anmeldenummer: 86113647.1

(22) Anmeldetag: 02.10.86

(51) Int. Cl.⁴: **B65G 53/66, B65G 53/22**

(54) Verfahren zum Kalibrieren einer pneumatischen Fördereinrichtung.

(30) Priorität: **22.10.85 DE 3537538**

(43) Veröffentlichungstag der Anmeldung:
**29.04.87 Patentblatt 87/18**

(45) Bekanntmachung des Hinweises auf die Patenterteilung:
**04.01.89 Patentblatt 89/1**

(84) Benannte Vertragsstaaten:
**BE DE ES FR GB**

(56) Entgegenhaltungen:
**DE-A- 3 309 210**
**DE-B- 2 461 579**
**US-A- 4 521 139**

(73) Patentinhaber: **Krupp Polysius AG,**
**Graf-Galen-Strasse 17, D-4720 Beckum(DE)**

(72) Erfinder: **Franz-Josef, Stephan Adrian, Dipl.-Ing.,**
**Nordwaiderstrasse 7a, D-4775 Lippetal(DE)**

(74) Vertreter: **Tetzner, Volkmar, Dr.-Ing. Dr. jur.,**
**Van-Gogh-Strasse 3, D-8000 München 71(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 219 744 B1

## Beschreibung

Die Erfindung betrifft ein Verfahren zum Kalibrieren einer pneumatischen Fördereinrichtung.

Eine Vorrichtung zur pneumatischen Förderung von Feingut mit den Merkmalen a) und b) des Anspruches 1 ist durch die DE-A 3 309 210.9 bekannt. Die Austragsleistung der pneumatischen Fördereinrichtung läßt sich hierbei durch Überführen von Gut aus dem Speicherraum in das Fördergefäß erhöhen und durch Überführen von Gut aus dem Fördergefäß in den Speicherraum verringern. Eine derartige Fördereinrichtung zeichnet sich dadurch aus, daß Änderungen der Förderleistung sehr rasch erfolgen können und eine sehr genaue Konstanthaltung der eingestellten Förderleistung möglich ist.

Gemäß DE-A 3 309 210.9 erfolgt das Kalibrieren der bekannten pneumatischen Fördereinrichtung wie folgt:

Bei geschlossenem Gutzuführanschluß wird zunächst eine bestimmte Füllhöhe im Fördergefäß eingestellt und mittels des Druckes des Speicherraumes konstantgehalten. Der sich hierbei im Fördergefäß einstellende pneumatische Förderdruck wird gemessen. Nunmehr wird die während eines bestimmten Förderintervalles auftretende Gewichtsabnahme des gesamten Systemes ermittelt und hieraus die Förderleistung (ausgetragene Gutmenge pro Zeiteinheit) errechnet. Man gewinnt damit einen ersten Punkt der gesuchten Funktion (Förderleistung in Abhängigkeit vom pneumatischen Förderdruck). Sodann wird der gleiche Vorgang wiederholt, indem im Fördergefäß eine andere Füllhöhe und damit eine andere Förderleistung eingestellt wird. Durch mehrmaliges Wiederholen dieser Messung lassen sich beliebig viele Punkte der gesuchten Kalibrierfunktion ermitteln.

Bei diesem bekannten Kalibrierverfahren ist es somit erforderlich, während der Kalibrierung die Förderleistung zu verändern. Dies ist jedoch aus betrieblichen Gründen im allgemeinen unerwünscht, da eine derartige Kalibrierung vielfach auch während des laufenden Betriebes einer solchen pneumatischen Fördereinrichtung durchgeführt werden soll und hierbei die pneumatische Förderleistung durch den Verbraucher vorgegeben ist (so ist es beispielsweise sehr unerwünscht, während des Kalibrierens einer zur Brennstoffversorgung eines Brenners dienenden pneumatischen Fördereinrichtung die Brennerleistung ändern zu müssen).

Der Erfindung liegt daher die Aufgabe zugrunde, ein Verfahren zum Kalibrieren einer pneumatischen Fördereinrichtung mit den Merkmalen a) und b) des Anspruches 1 so auszubilden, daß die Eichung ohne Beeinträchtigung des laufenden Betriebes, insbesondere ohne die Notwendigkeit einer Änderung der pneumatischen Förderleistung, durchgeführt werden kann. Das Kalibrierverfahren soll andererseits so ausgestaltet sein, daß während der Kalibrierung auftretende, betrieblich bedingte Änderungen der pneumatischen Förderleistung den Kalibriervorgang nicht stören.

Diese Aufgabe wird erfindungsgemäß durch die Merkmale des Anspruches 1 gelöst.

Zweckmäßige Ausgestaltungen der Erfindung sind Gegenstand der Unteransprüche.

Die Erfindung beruht auf der Erkenntnis, daß bei einer pneumatischen Fördereinrichtung mit den Merkmalen a) und b) des Anspruches 1 eine lineare Abhängigkeit zwischen dem pneumatischen Förderdruck und der Förderleistung besteht und daß ferner der Leerwiderstand (d.h. der pneumatische Förderdruck bei der Förderleistung Null) während der Förderung konstant ist. Unter diesen Voraussetzungen genügt es für die Ermittlung der gesuchten Kalibrierfunktion (Abhängigkeit der Förderleistung vom Förderdruck), den Leerwiderstand und die Steigung der fraglichen Geraden (den sog. Kalibrierfaktor) zu bestimmen.

Im Hinblick auf die lineare Abhängigkeit zwischen Förderleistung und Förderdruck wird die Ermittlung des Kalibrierfaktors nicht beeinträchtigt, wenn während des Kalibriervorganges Sollwert-Änderungen der Förderleistung durchgeführt werden. Der Betrieb der pneumatischen Fördereinrichtung wird daher durch das Kalibrieren nicht beeinträchtigt.

Wesentlich für ein genaues Kalibrieren ist andererseits, daß während der Übernahme (Abtastung) der Füllgewichte $m(t_1)$ und mit $m(t_2)$ keine größeren Schwankungen des Wägesignales vorliegen (was beispielsweise der Fall sein kann, wenn sich eine Filterabreinigung auf die Füllgewichtsmessung auswirkt). Erfindungsgemäß beginnt daher die Integration des Druckwertes erst dann, nachdem das Füllgewicht nach Unterbrechung der Gutzufuhr während einer vorgegebenen Zeitspanne annähernd gleichmäßig gefallen ist. Eine entsprechende Prüfung erfolgt auch am Ende des Kalibriervorganges.

Die Erfindung wird im folgenden anhand eines in der Zeichnung veranschaulichten Ausführungsbeispieles näher erläutert. In der Zeichnung zeigen

Fig. 1 eine Schemadarstellung einer nach dem erfindungsgemäßen Verfahren zu kalibrierenden pneumatischen Fördereinrichtung;

Fig. 2 bis 4 Diagramme zur Erläuterung des Kalibrierverfahrens.

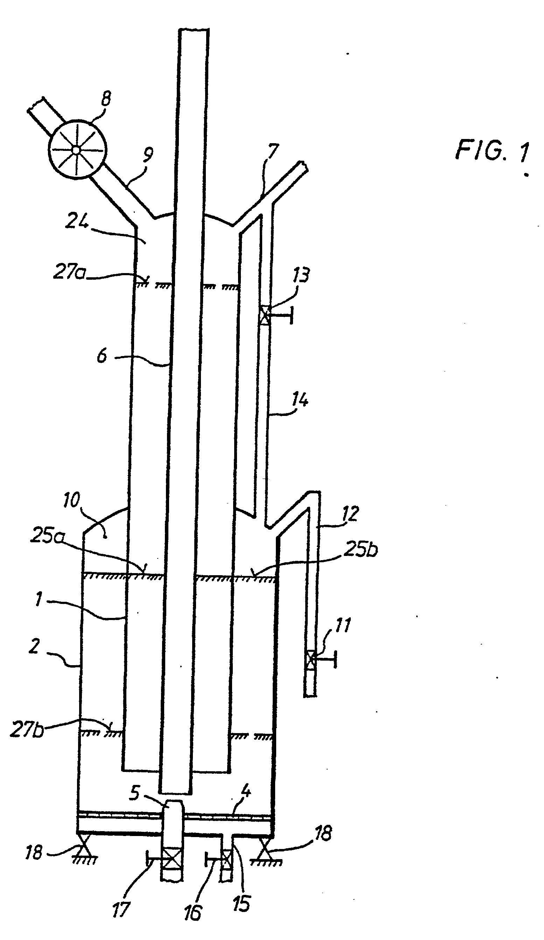

Die pneumatische Fördereinrichtung gemäß Fig. 1 enthält ein Fördergefäß 1 und einen ringförmig ausgebildeten und koaxial zum Fördergefäß 1 angeordneten Speicherraum 2. Das am unteren Ende offene Fördergefäß 1 taucht in den Speicherraum 2 ein und ist mit diesem nach Art kommunizierender Röhren verbunden.

Das Fördergefäß 1 und der Speicherraum 2 sind mit einem gemeinsamen pneumatischen Auflockerungsboden 4 versehen.

Durch den Auflockerungsboden 4 ist eine Förderdüse 5 hindurchgeführt, über der sich die Eintrittsöffnung einer pneumatischen Förderleitung 6 befindet, die das Fördergefäß 1 in vertikaler Richtung durchsetzt.

Im oberen Bereich des Fördergefäßes 1 ist ein Entlüftungsanschluß 7 sowie ein mit einer Zellenradschleuse 8 versehener Gutzuführanschluß 9 vorgesehen.

Der luftgefüllte obere Bereich 10 des Speicherraumes 2 ist mit einem durch ein Ventil 11 regelbaren Luftzufuhranschluß 12 sowie mit einem durch ein Ventil 13 regelbaren Luftableitungsanschluß 14 verbunden.

Der Raum unterhalb des Auflockerungsbodens 4 ist mit einem Luftzufuhranschluß 15 versehen, in dem ein Konstantmengenregelventil 16 angeordnet ist. Ein weiteres solches Ventil 17 ist der Förderdüse 5 vorgeschaltet.

Die vom Fördergefäß 1 und vom Speicherraum 2 gebildete pneumatische Fördereinrichtung stützt sich auf Druckmeßdosen 18 ab.

Die Funktion der Fördereinrichtung gemäß Fig. 1 im Betrieb ist folgendermaßen:

Herrscht im oberen Bereich 10 des Speicherraumes 2 Atmosphärendruck (ebenso wie über den Entlüftungsanschluß 7 stets auch im oberen Bereich 24 des Fördergefäßes 1), so nimmt das Gut im Fördergefäß 1 und im Speicherraum 2 gleiche Füllhöhe ein (Füllstand 25a und 25b). Der pneumatische Auflockerungsdruck (Luftzufuhranschluß 15) bzw. der etwa gleich große pneumatische Druck an der Förderdüse 5 entsprechen dem Füllstand im Fördergefäß 1 bzw. einer bestimmten Förderleistung. In das Fördergefäß 1 wird über den Gutzuführanschluß 9 so viel Gut nachgespeist, wie über die Förderleitung 6 ausgetragen wird.

Treten aus irgendwelchen Gründen Schwankungen der Gutzufuhr auf, so wird der Füllstand im Fördergefäß 1 dadurch auf dem vorgegebenen Wert konstantgehalten, daß bei einer etwaigen Verringerung des Füllstandes im Fördergefäß 1 Gut aus dem Speicherraum 2 in das Fördergefäß überführt wird. Dies erfolgt durch Vergrößerung des Druckes im oberen Bereich 10 des Speicherraumes 2. Steigt dagegen der Füllstand im Fördergefäß 1 über den der gewünschten Förderleistung entsprechenden Wert, so wird der Druck im oberen Bereich 10 des Speicherraumes 2 verringert und hierdurch Gut aus dem Fördergefäß 1 in den Speicherraum 2 überführt.

Soll die Austragsleistung des Fördergefäßes 1 rasch vergrößert werden, was eine entsprechende Vergrößerung des Füllstandes im Fördergefäß 1 bedingt, so wird im oberen Bereich 10 des Speicherraumes 2 ein entsprechend großer Druck aufgebaut, so daß sich im Speicherraum 2 der Füllstand 27b und im Fördergefäß 1 ein Füllstand 27a einstellt. Bei Vorgabe einer höheren gewünschten Förderleistung wird also schlagartig Gut aus dem Speicherraum 2 in das Fördergefäß 1 gedrückt. Umgekehrt wird bei einer gewünschten Verkleinerung der Austragsleistung des Fördergefäßes 1 durch Druckentlastung im Speicherraum 2 (Öffnen des Ventiles 13) Gut rasch aus dem Fördergefäß 1 in den Speicherraum 2 überführt.

Im folgenden wird nun das Kalibrieren der pneumatischen Fördereinrichtung nach dem erfindungsgemäßen Verfahren beschrieben, wobei hinsichtlich der verwendeten Formelzeichen auf die Zusammenstellung und Erläuterung der Formelzeichen am Ende der Beschreibung Bezug genommen wird.

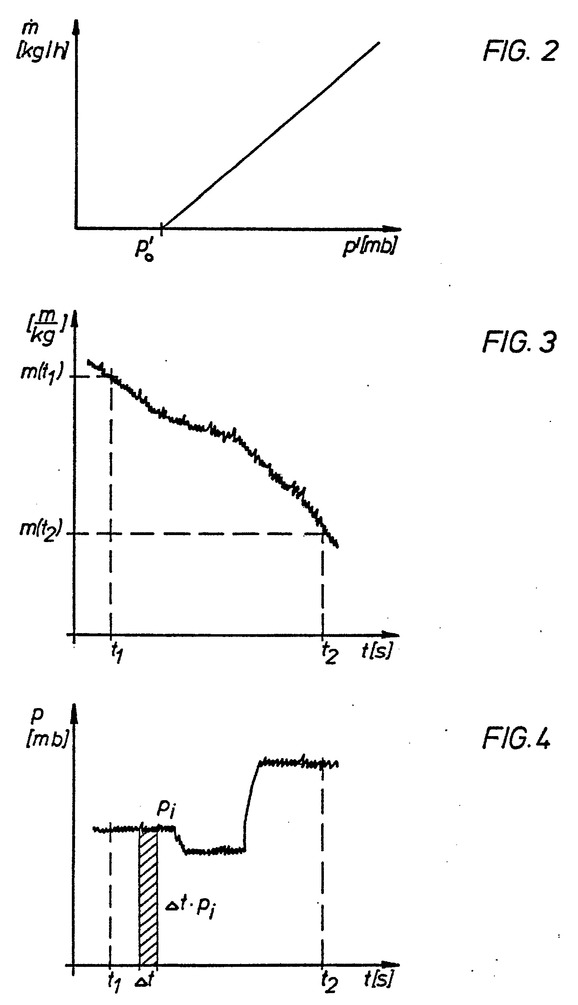

Bei den der Erfindung zugrundeliegenden Versuchen wurde festgestellt, daß zwischen dem Förderdruck p' und der Förderleistung ṁ die in Fig. 2 veranschaulichte lineare Abhängigkeit besteht, wobei der Leerwiderstand $p_0'$ während der Förderung konstant ist. Die Steigung der Geraden wird im folgenden als Kalibrierfaktor k bezeichnet.

Gemäß Fig. 2 besteht zwischen der Förderleistung ṁ, dem Kalibrierfaktor k und dem Druckwert p (Differenz zwischen Förderdruck p' und Leerwiderstand $p_0'$) folgender Zusammenhang:

(1)    $\dot{m} = k \cdot (p' - p_0') = k \cdot p$

Ziel der Kalibrierung ist es, den unbekannten Kalibrierfaktor k zu ermitteln.

Zum Kalibrieren wird die Gutzufuhr zum Fördergefäß 1 (über den Gutzuführanschluß 9) unterbrochen. Der der gerade gewünschten Förderleistung entsprechende Füllstand im Fördergefäß 1 wird in der bereits erläuterten Weise durch Steuerung des Druckes im oberen Bereich 10 des Speicherraumes 2 konstantgehalten. Während der Kalibrierung erfolgt somit die Nachführung des Gutes zum Fördergefäß 1 ausschließlich durch den Speicherraum 2.

Die Abnahme des Füllgewichtes m der gesamten Fördereinrichtung über die Zeit t ist ein Maß für die Förderleistung:

$$(2) \qquad \dot{m} = - \frac{dm}{dt}$$

Fig. 3 veranschaulicht die während des Kalibriervorganges auftretende Abnahme des Füllgewichtes m. Hierbei ist angenommen, daß die Kalibrierung im Zeitpunkt $t_1$ beginnt und im Zeitpunkt $t_2$ endet. Das Füll-gewicht zu Beginn des Kalibriervorganges ist $m(t_1)$ und am Ende $m(t_2)$. Aus den Gleichungen (1) und (2) ergibt sich

$$(3) \qquad -\frac{dm}{dt} = k \cdot p(t)$$

Hieraus folgt

$$(4) \qquad -\int_{t_1}^{t_2} dm = k \cdot \int_{t_1}^{t_2} p(t)\,dt$$

$$(5) \qquad -\left[m(t_2) - m(t_1)\right] = \triangle m = k \cdot \int_{t_1}^{t_2} p(t)\,dt$$

Führt man nun die Integration des Druckwertes p(t) über die Zeit mittels numerischer Integration in n Abtastschritten durch, so läßt sich die Gleichung (5) wie folgt schreiben:

$$(6) \qquad \triangle m = k \cdot \triangle t \cdot \sum_{i=1}^{n} p_i$$

Hieraus ergibt sich der gesuchte Kalibrierfaktor k wie folgt:

$$(7) \qquad k = \frac{\triangle m}{\triangle t \cdot \sum_{i=1}^{n} p_i}$$

Fig. 4 veranschaulicht dabei einen möglichen Verlauf des Druckes p während des Kalibriervorganges, wobei angenommen ist, daß während des Kalibrierens zwei Änderungen der Förderleistung durchgeführt werden.

Mit dem so ermittelten Kalibrierfaktor k wird der Soll- und Ist-Wert der Förderleistung korrigiert. Beispielsweise wird bei einem um 5% größeren Faktor k auch der Soll- und Ist-Wert um 5% angehoben. Die tatsächliche Förderleistung wird hierdurch nicht verändert.

Zu Beginn und am Ende des Kalibriervorganges wird das Füllgewichtssignal daraufhin überprüft, ob keine größeren Signalschwankungen vorliegen, die auf äußeren Störungen beruhen. So beginnt die Integration des Druckwertes p bei $t_1$ erst dann – unter Übernahme des zu Beginn der Kalibrierung bestehenden Füllgewichtes $m(t_1)$ –, nachdem das Füllgewicht nach Unterbrechung der Gutzufuhr während einer vorgegebenen Zeitspanne annähernd gleichmäßig gefallen ist (vgl. Fig. 3). Die Integration des Druckwertes p wird erst dann beendet – wobei gleichzeitig das nunmehr vorhandene Füllgewicht $m(t_2)$ übernommen wird –, wenn eine Mindestmenge $\Delta m_{min}$ abgezogen worden und das Füllgewicht während einer vorgegebenen weiteren Zeitspanne annähernd gleichmäßig gefallen ist. Beim Überschreiten einer vorgegebenen Maximalmenge $\Delta m_{max}$ wird die Kalibrierung unterbrochen.

Zusammenstellung der verwendeten Formelzeichen:

$\dot{m}$      Förderleistung

$p_0'$      Leerwiderstand

$p'$      Förderdruck (Luftdruck vor der Förderdüse 5 bzw. Druck unter- oder oberhalb des Belüftungsbodens 4)

$p$      Differenz zwischen Förderdruck p' und Leerwiderstand $p_0'$

$p(t)$      Funktion von p mit der Zeit t

$p_i$      Werte von p zu den n Abtastzeitpunkten zwischen i=1 und i=n

$k$      Kalibrierfaktor

$m$      Füllgewicht

$\dfrac{dm}{dt}$      Änderung des Füllgewichtes über der Zeit t

$m(t_1)$      Füllgewicht zu Beginn der Kalibrierung (Zeitpunkt $t_1$)

$m(t_2)$      Füllgewicht am Ende der Kalibrierung (Zeitpunkt $t_2$)

$\Delta m$      $m(t_1) - m(t_2)$

$\Delta m_{min}$      Mindestmenge von $\Delta m$

$\Delta m_{max}$      Maximalmenge von $\Delta m$

$\Delta t$      Zeit zwischen zwei Abtastschritten

$n$      Anzahl der Abtastschritte während der Kalibrierung

## Patentansprüche

1. Verfahren zum Kalibrieren einer pneumatischen Fördereinrichtung,
a) enthaltend ein Fördergefäß (1) mit einer im Bodenbereich angeordneten Förderdüse (5), einem Gutzuführanschluß (9) im oberen Bereich sowie einer mit ihrer Eintrittsöffnung nahe der Förderdüse (5) vorgesehenen pneumatischen Förderleitung (6), wobei die Füllhöhe im Fördergefäß (1) den pneumatischen Förderdruck und damit die Förderleistung der Fördereinrichtung bestimmt,
b) ferner enthaltend einen Speicherraum (2), der mit dem Fördergefäß (1) nach dem Prinzip kommunizierender Röhren verbunden ist, wobei die Austragsleistung der Fördereinrichtung durch Überführung von Gut aus dem Speicherraum (2) in das Fördergefäß (1) erhöht und durch Überführung von Gut aus dem Fördergefäß (1) in den Speicherraum (2) verringert wird,
c) wobei zwischen der Förderleistung ($\dot{m}$), der Differenz (p) zwischen dem Förderdruck (p') und dem Leerwiderstand ($p_0'$) sowie einem durch die Kalibrierung zu ermittelnden Kalibrierfaktor (k) folgender Zusammenhang besteht:
(1)   $\dot{m} = k \cdot (p' - p_0') = k \cdot p$
d) hierbei erfolgt die Ermittlung des Kalibrierfaktors (k) bei unterbrochener Gutzuführung nach der Formel

$$k = \frac{\Delta m}{\Delta t \cdot \displaystyle\sum_{i=1}^{n} p_i}$$

durch numerische Integration der Differenz (p) zwischen dem Förderdruck (p') und dem Leerwiderstand ($p_0'$) in n Abtastschritten sowie durch Bestimmung der zwischen Beginn (Zeitpunkt $t_1$) und Ende (Zeitpunkt $t_2$) der Kalibrierung auftretenden Abnahme ($\Delta m$) des Füllgewichtes, wobei $\Delta t$ die Zeit zwischen zwei aufeinanderfolgenden Abtastschritten ist;
e) die Übernahme des Füllgewichtes $m(t_1)$ zu Beginn der Kalibrierung und der Start der Integration erfolgen erst, nachdem das Füllgewicht nach Unterbrechung der Gutzufuhr während einer vorgegebenen Zeitspanne annähernd gleichmäßig gefallen ist.

2. Verfahren nach Anspruch 1, dadurch gekennzeichnet, daß die Integration des Druckwertes (p) erst dann beendet und das nunmehr vorhandene Füllgewicht $m(t_2)$ übernommen wird, wenn eine Mindestmenge ($\Delta m_{min}$) abgezogen worden ist und das Füllgewicht während einer vorgegebenen weiteren Zeit-

EP 0 219 744 B1

spanne annähernd gleichmäßig gefallen ist.

3. Verfahren nach Anspruch 1, dadurch gekennzeichnet, daß beim Überschreiten einer vorgegebenen Maximalmenge ($\Delta m_{max}$) die Kalibrierung abgebrochen wird.

4. Verfahren nach Anspruch 1, dadurch gekennzeichnet, daß der Soll- und Ist-Wert der Förderleistung entsprechend dem ermittelten Kalibrierfaktor (k) geändert werden.


**Claims**

1. Method of calibrating a pneumatic conveying device

a) containing a conveyor vessel (1) with a conveying nozzle (5) arranged in the base region, a material supply connection (9) in the upper region and a pneumatic conveyor pipe (6) provided near the conveying nozzle (5), the pneumatic conveying pressure and with it the conveying capacity of the conveying device being determined by the filling level in the conveyor vessel (1).

b) also containing a storage chamber (2) which is connected to the conveyor vessel (1) according to the principle of communicating pipes, the discharge capacity of the conveying apparatus being increased by transferring material from the storage chamber (2) to the conveyor vessel (1) and reduced by transferring material from the conveyor vessel (1) to the storage chamber (2).

c) and the following relationship exists between the conveying capacity m. the difference (p') between the conveying pressure (p) and the empty resistance ($p_0'$) and a calibration factor (k) to be determined by calibration:

(1)  $\dot{m} = k \cdot (p' - p_0') = k \cdot p$

d) the calibration factor (k) is determined with the material supply interrupted according to the formula

$$k = \frac{\Delta m}{\Delta t \cdot \sum_{i=1}^{n} p_i}$$

by means of numeric integration of the difference (p) between the conveying pressure (p') and the empty resistance ($p_0'$) in n sensing steps and by determining the reduction ($\Delta m$) in the filling weight occurring between the beginning (time $t_1$) and end (time $t_2$) of the calibration. $\Delta t$ being the time between two successive sensing steps:

e) the taking of the filling weight $m(t_1)$ at the beginning of the calibration and the start of the integration only occur after the filling weight has fallen approximately evenly during a predetermined period of time after interruption of the material supply.

2. Method as claimed in claim 1, characterised in that the integration of the pressure value (p) is only ended and at the same time the filling weight $m(t_2)$ then existing is taken when a minimum quantity ($\Delta m_{min}$) has been extracted and the filling weight has fallen approximately evenly during a predetermined further period of time.

3. Method as claimed in claim 1, characterised in that the calibration is discontinued when a predetermined maximum quantity ($\Delta m_{max}$) is exceeded.

4. Method as claimed in claim 1, characterised in that the theoretical value and the actual value for the conveying capacity are altered according to the calibration factor (k) which is obtained.


**Revendications**

1. Procédé de calibrage d'un transporteur pneumatique,

a) comprenant une cuve de transport (1) qui comporte un ajutage de transport (5) disposé dans son fond, un raccord d'arrivée de matière (9) situé à la partie supérieure ainsi qu'une canalisation pneumatique de transport (6), dont l'orifice d'entrée est proche de l'ajutage de transport (5), le niveau de remplissage de la cuve (1) déterminant la pression pneumatique de transport et ainsi le débit du transporteur,

b) comprenant par ailleurs une chambre de réserve (2) reliée à la cuve de transport (1) selon le principe des tubes communicants, le débit de décharge du transporteur augmentant par transfert de matière de la chambre de réserve (2) dans la cuve de transport (1) et diminuant par transfert de matière de la cuve (1) dans la chambre de réserve (2),

c) la relation suivante existant entre le débit (ṁ),

la différence (p) entre la pression de transport (p') et la résistance en marche à vide ($p_0'$) ainsi qu'un facteur de calibrage (k) se déterminant par le calibrage:

(1)  $\dot{m} = k \cdot (p' - p_0') = k \cdot p$

d) la détermination du facteur de calibrage (k) s'effectuant alors, l'arrivée de matière étant interrom-

6

pue, d'après la relation

$$k = \frac{\Delta m}{\Delta t \cdot \sum_{i=1}^{n} p_i}$$

par intégration numérique de la différence (p) entre la pression de transport (p') et la résistance en marche à vide ($p_0'$) en n phases d'analyse ainsi que par détermination de la diminution ($\Delta m$) du poids de remplissage se produisant entre le début (instant $t_1$) et la fin (instant $t_2$) du calibrage, $\Delta t$ représentant le temps séparant deux phases successives d'analyse;

e) la lecture du poids de remplissage $m(t_1)$ au début du calibrage et le démarrage de l'intégration n'ayant lieu qu'après que le poids de remplissage a chuté de manière approximativement constante après interruption de l'arrivée de matière pendant un intervalle de temps prédéterminé.

2. Procédé selon la revendication 1, caractérisé en ce que l'intégration de la valeur de la pression (p) n'est achevée et le poids de remplissage $m(t_2)$ apparaissant alors n'est relevé que lorsqu'une quantité minimale ($\Delta m_{min}$) a été prélevée et que le poids de remplissage a chuté de manière approximativement constante pendant un autre intervalle de temps prédéterminé.

3. Procédé selon la revendication 1, caractérisé en ce que le calibrage est interrompu lorsqu'une quantité maximale prédéterminée ($\Delta m_{max}$) est dépassée.

4. Procédé selon la revendication 1, caractérisé en ce que la valeur de consigne et la valeur réelle du débit sont modifiées selon le facteur de calibrage (k) qui a été déterminé.

FIG. 1

FIG. 2

FIG. 3

FIG. 4